# EUROPEAN PATENT APPLICATION

(11) **EP 4 546 490 A1**
(43) Date of publication of application: **30.04.2025**
(21) Application number: 23853036.4
(22) Date of filing: 10.08.2023
(51) Int. Cl.: H01M 10/0567, H01M 10/052, H01M 4/505, H01M 4/525

(54) **NONAQUEOUS ELECTROLYTE AND LITHIUM SECONDARY BATTERY COMPRISING SAME**

(30) Priority: 12.08.2022 KR 20220101640
(71) Applicant: LG Energy Solution, Ltd., Seoul 07335 (KR)
(72) Inventor: YEOM, Chul Eun, Daejeon 34122 (KR); LEE, Chul Haeng, Daejeon 34122 (KR); LEE, Kyung Mi, Daejeon 34122 (KR); LEE, Jung Min, Daejeon 34122 (KR); JI, Su Hyeon, Daejeon 34122 (KR); HAN, Jung Gu, Daejeon 34122 (KR); CHO, Yoon Gyo, Daejeon 34122 (KR)
(74) Representative: Hoffmann Eitle
(86) International application number: PCT/KR2023/011852
(87) International publication number: WO 2024/035169

(57) **Abstract**

The present invention provides a non-aqueous electrolyte including: a lithium salt; an organic solvent; and an additive, wherein the additive includes a compound represented by a specific formula. The non-aqueous electrolyte according to the present invention includes the additive having excellent effects of film protection, O₂ scavenging, and HF scavenging of the electrodes, and thus may improve cycle characteristics and high-temperature storage characteristics of the lithium secondary battery including the non-aqueous electrolyte.

## Description

### TECHNICAL FIELD

### Cross-reference to Related Applications

This application claims the benefit of Korean Patent Application No. 10-2022-0101640, filed on August 12, 2022, in the Korean Intellectual Property Office, the disclosure of which is incorporated herein in its entirety by reference.

### Technical Field

The present invention relates to a non-aqueous electrolyte and a secondary battery including the same.

### BACKGROUND ART

Recently, as application fields of a lithium secondary battery have rapidly expanded to not only the power supply of electronic devices such as electricity, electronics, communications, and computers but also the power storage supply of large-area devices such as automobiles and power storage devices, a demand for a secondary battery having high capacity, high output, and high stability has been increasing.

In particular, in a lithium secondary battery for automobiles, high capacity, high output, and long-term service life characteristics has been becoming important. In order to increase the capacity of the lithium secondary battery, a high-nickel positive electrode active material having high energy density but low stability can be used, or it can be considered that the lithium secondary battery is driven with a high voltage.

However, when the lithium secondary battery is driven under the above conditions, as charging and discharging proceeds, the surface structure of an electrode or a film formed on the surface of positive/negative electrode deteriorates due to a side reaction caused by the deterioration of an electrolyte, and thus transition metal ions may be eluted from the surface of the positive electrode. As described above, since the eluted transition metal ions are electro-deposited on the negative electrode and reduce passivation ability of a solid electrolyte interphase (SEI) of the negative electrode, there occurs a limitation in that the negative electrode deteriorates. This deterioration phenomenon of the secondary battery tends to be further accelerated when the potential of the positive electrode is increased or when the battery is exposed to high temperatures.

In addition, when the lithium secondary battery is continuously used for a long period of time or left to stand at high temperatures, gas is generated, thereby causing a so-called swelling phenomenon in which the thickness of the battery increases, and it is known that the amount of gas generated in this case depends on the state of the SEI.

Therefore, in order to solve such problems, research and development on methods capable of suppressing the elution of metal ions from the positive electrode and forming a stable SEI film on the negative electrode, thereby reducing the swelling phenomenon of the lithium secondary battery and increasing the stability at high temperatures have been attempted.

### DISCLOSURE OF THE INVENTION

### TECHNICAL PROBLEM

An aspect of the present invention provides a non-aqueous electrolyte which may reduce a side reaction of an electrolyte by forming a stable film on the positive/negative electrodes, and have excellent O₂ scavenging effect and HF scavenging effect.

In addition, another aspect of the present invention provides a lithium secondary battery including the above-described non-aqueous electrolyte and having improved high-temperature cycle characteristics and high-temperature storage performance, thereby improving overall performance.

### TECHNICAL SOLUTION

According to an aspect of the present invention, there is provided a non-aqueous electrolyte including: a lithium salt; an organic solvent; and an additive, wherein the additive includes a compound represented by Formula 1 below:

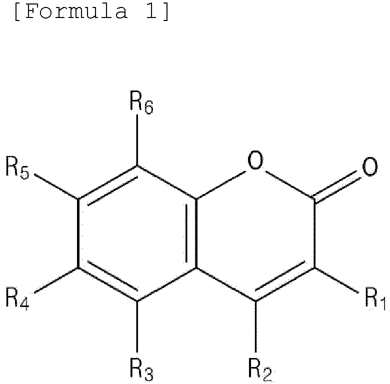

In Formula 1 above, R₁ to R₆ each independently include hydrogen, halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and at least one among R₁ to R₆ includes an isocyanate group.

In addition, according to another aspect of the present invention, there is provided a lithium secondary battery including: a positive electrode including a positive electrode active material; a negative electrode including a negative electrode active material; a separator disposed between the positive electrode and the negative electrode; and the above-described non-aqueous electrolyte.

### ADVANTAGEOUS EFFECTS

The non-aqueous electrolyte of the present invention includes, as an additive, a coumarin-based compound substituted with a substituent containing an isocyanate group. The additive enables the formation of film having excellent durability on positive/negative electrodes, thereby having an effect of suppressing the elution of transition metals from the positive electrode and the side reaction of the electrolyte in the electrodes. In addition, the additive includes an isocyanate group as a substituent, which may remove a Lewis acid of a lithium salt (HF scavenging effect) which may be generated during high-temperature exposure, thereby preventing the decomposition of an organic solvent and the decomposition of an electrode film due to such a Lewis acid. In addition, the non-aqueous electrolyte according to the present invention has effects of suppressing the decomposition of the electrolyte and the generation of gas (O₂ scavenging effect) by binding a reactive oxygen compound generated in the positive electrode and a coumarin structure included in the compound represented by Formula 1 above.

Accordingly, the lithium secondary battery including the above-described non-aqueous electrolyte may have improved high-temperature cycle characteristics and high-temperature storage characteristics.

### MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Meanwhile, before describing the present invention, unless otherwise specified in the present invention, the expression "*" denotes the same or different atom or a portion connected (binding site) between ends of a formula.

Also, the expressions "a" and "b" in the description of "a to b carbon atoms" in the specification each denote the number of carbon atoms included in a specific functional group. That is, the functional group may include "a" to "b" carbon atoms. For example, an "alkyl group having 1 to 5 carbon atoms" means an alkyl group containing 1 to 5 carbon atoms, that is, CH₃-, CH₃CH₂-, CH₃CH₂CH₂-, (CH₃) ₂CH-, CH₃CH₂CH₂CH₂-, (CH₃) ₂CHCH₂-, CH₃CH₂CH₂CH₂CH₂-, (CH₃) ₂CHCH₂CH₂-, or the like.

In addition, in the present specification, an alkyl group, an alkenyl group, or an alkynyl group may all be substituted or unsubstituted. Unless otherwise defined, the term "substituted" means that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, an isocyanate group, an ether group, a sulfone group, a sulfonate group, a sulfate group, etc.

Hereinafter, the present invention will be described in more detail.

### Non-aqueous Electrolyte

The present invention relates to a non-aqueous electrolyte. More specifically, the non-aqueous electrolyte may be a non-aqueous electrolyte for a lithium secondary battery.

The non-aqueous electrolyte according to the present invention includes: a lithium salt; an organic solvent; and an additive, wherein the additive includes a compound represented by Formula 1 below:

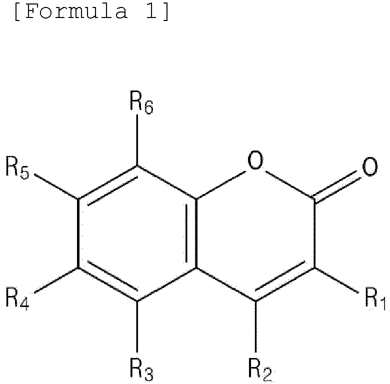

In Formula 1 above, R₁ to R₆ each independently include hydrogen, halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and at least one among R₁ to R₆ includes an isocyanate group.

The non-aqueous electrolyte of the present invention includes, as an additive, a coumarin-based compound substituted with a substituent containing an isocyanate group. The additive enables the formation of film having excellent durability in positive/negative electrodes, thereby having an effect of suppressing the elution of transition metals from the positive electrode and the side reaction of the electrolyte in the electrodes. In addition, the additive includes an isocyanate group as a substituent, which may remove a Lewis acid of a lithium salt (HF scavenging effect) which may be generated during high-temperature exposure, thereby preventing the decomposition of an organic solvent and the decomposition of an electrode film due to such a Lewis acid. In addition, the non-aqueous electrolyte according to the present invention has effects of suppressing the decomposition of the electrolyte and the generation of gas (O₂ scavenging effect) by binding a reactive oxygen compound generated in the positive electrode and a coumarin structure included in the compound represented by Formula 1 above. Accordingly, the lithium secondary battery including the above-described non-aqueous electrolyte may have improved high-temperature cycle characteristics and high-temperature storage characteristics.

### (1) Lithium Salt

As the lithium salt used in the present invention, various lithium salts commonly used in a non-aqueous electrolyte for a lithium secondary battery may be used without limitation. For example, the lithium salt may include Li+ as a cation, and may include at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻ as an anion.

Specifically, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN (SO₂F)₂ (LiFSI), LiCH₃SO₃, LiCF₃CO₂, LiCH₃CO₂, and LiN(SO₂CF₂CF₃)₂ (LiBETI). Specifically, the lithium salt may include at least one selected from the group consisting of LiBF₄, LiClO₄, LiPF₆, LiB(C₂O₄)₂ (LiBOB), LiCF₃SO₃, LiN (SO₂CF₃)₂ (LiTFSI), (LiN(SO₂F)₂ (LiFSI), and LiN (SO₂CF₂CF₃)₂ (LiBETI).

The lithium salt may be included in the non-aqueous electrolyte at a concentration of 0.5 M to 5 M, specifically at a concentration of 0.8 M to 4 M, and more specifically at a concentration of 0.8 M to 2.0 M. When the concentration of the lithium salt satisfies the above range, the lithium ion yield (Li+ transference number) and the degree of dissociation of lithium ions may be improved, thereby improving the output characteristics of the battery.

### (2) Organic Solvent

The organic solvent is a non-aqueous solvent commonly used in a lithium secondary battery, and is not particularly limited as long as it may minimize decomposition by oxidation reaction or the like in the process of charging and discharging the secondary battery.

Specifically, the organic solvent includes at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate the lithium salt in the electrolyte due to high permittivity as a highly viscous organic solvent, specifically, may include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and more specifically, may include ethylene carbonate.

In addition, the linear carbonate-based organic solvent is an organic solvent having low viscosity and low permittivity, specifically, may include at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and more specifically, may include ethyl methyl carbonate (EMC).

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 10:90 to 40:60, specifically, in a volume ratio of 10:90 to 30:70, and more specifically in a volume ratio of 15:85 to 30:70. When the mixing ratio of the cyclic carbonate-based organic solvent and the linear carbonate-based organic solvent satisfies the above range, both high permittivity and low viscosity characteristics may be satisfied, and excellent ion conductivity characteristics may be achieved.

Furthermore, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent, in order to prepare an electrolyte having high ionic conductivity.

The linear ester-based organic solvent may include at least one selected from the group consisting of methyl acetate, ethyl acetate, propyl acetate, methyl propionate, ethyl propionate, propyl propionate, and butyl propionate.

Also, the cyclic ester-based organic solvent may include, specifically, at least one selected from the group consisting of γ-butyrolactone, γ-valerolactone, γ-caprolactone, σ-valerolactone, and ε-caprolactone.

Meanwhile, if necessary, any organic solvent commonly used in a non-aqueous electrolyte may be additionally used without limitation as the organic solvent. For example, at least one organic solvent among an ether-based organic solvent, a glyme-based organic solvent, and a nitrile-based organic solvent may be further included.

As the ether-based solvent, any one selected from the group consisting of dimethyl ether, diethyl ether, dipropyl ether, methyl ethyl ether, methyl propyl ether, ethyl propyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent and having lower reactivity with metal, and may include at least one selected from the group consisting of dimethoxyethane (glyme, DME), diethoxyethane, diglyme, triglyme, and tetraglyme (TEGDME), but the glyme-based solvent is not limited thereto.

The nitrile-based organic solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but the nitrile organic solvent is not limited thereto.

### (3) Additive

The non-aqueous electrolyte according to the present invention includes a compound represented by Formula 1 below:

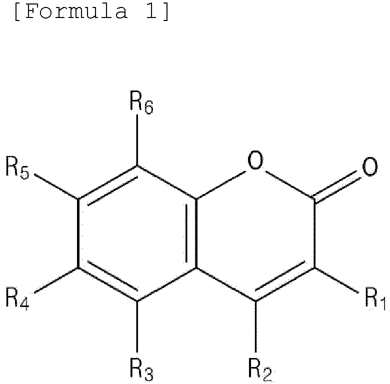

In Formula 1 above, R₁ to R₆ each independently include hydrogen, halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and at least one among R₁ to R₆ includes an isocyanate group.

The compound represented by Formula 1 above enables the formation of film having excellent durability in positive/negative electrodes, thereby having an effect of suppressing the elution of transition metals from the positive electrode and the side reaction of the electrolyte in the electrodes. In addition, the additive includes an isocyanate group as a substituent which may remove a Lewis acid of a lithium salt (e.g., HF etc.) (HF scavenging effect) which may be generated during high-temperature exposure, thereby preventing the decomposition of an organic solvent and the decomposition of an electrode film due to such a Lewis acid. In addition, the non-aqueous electrolyte according to the present invention has effects of suppressing the decomposition of the electrolyte and the generation of gas (O₂ scavenging effect) by binding a reactive oxygen compound generated in the positive electrode and a coumarin structure included in the compound represented by Formula 1 above. Therefore, the compound represented by Formula 1 above containing both the coumarin and the isocyanate group may have improved high-temperature life performance and high-temperature storage performance to a remarkable level.

In Formula 1, the substituted or unsubstituted alkyl group, the substituted or unsubstituted alkenyl group, the substituted or unsubstituted alkynyl group, or the substituted or unsubstituted alkoxy group may specifically be a substituted or unsubstituted alkyl group having 1 to 10 carbon atoms, a substituted or unsubstituted alkenyl group having 1 to 10 carbon atoms, a substituted or unsubstituted alkynyl group having 1 to 10 carbon atoms, or a substituted or unsubstituted alkoxy group having 1 to 10 carbon atoms, and more specifically may be a substituted or unsubstituted alkyl group having 1 to 5 carbon atoms, a substituted or unsubstituted alkenyl group having 1 to 5 carbon atoms, a substituted or unsubstituted alkynyl group having 1 to 5 carbon atoms, or a substituted or unsubstituted alkoxy group having 1 to 5 carbon atoms.

Specifically, in the compound represented by Formula 1 above, R₂ to R₆ may each be hydrogen, and R₁ may contain an isocyanate group, and specifically, the compound represented by Formula 2 below may be included.

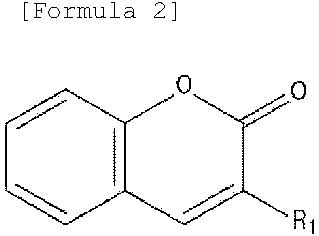

In Formula 2 above, the definition of R₁ is the same as defined in Formula 1 above, and R₁ includes an isocyanate group.

If the compound represented by Formula 1 above includes the compound represented by Formula 2 above, this is preferable in that it may further improve the durability of a film.

More specifically, the compound represented by Formula 1 above may include a compound represented by Formula 3 below: 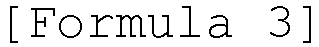 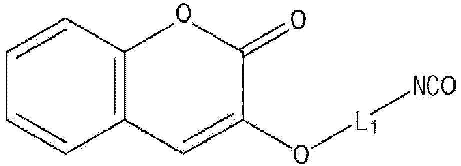 wherein, in Formula 3 above, L₁ is a substituted or unsubstituted alkylene group, a substituted or unsubstituted alkenylene group, a substituted or unsubstituted alkynylene group, a sulfone group, a sulfonate group, or a combination of two or more thereof. In this case, the alkylene group may be an alkylene group having 1 to 5 carbon atoms, the alkenylene group may be an alkenylene group having 1 to 5 carbon atoms, and the alkynylene group may be an alkynylene group having 1 to 5 carbon atoms.

The compound represented by Formula 3 above has an isocyanate group substituted at coumarin via a linker (*-O-L₁-*, where * is a binding site). The linker is preferable in terms of reducing the resistance of the positive/negative electrodes by increasing the oxygen content in the film formed on the positive/negative electrodes.

More specifically, the compound represented by Formula 1 above may include at least one selected from the group consisting of a compound represented by Formula 4A below and a compound represented by Formula 4B below:

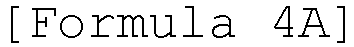

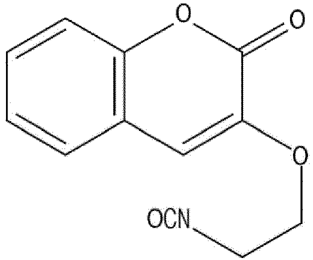

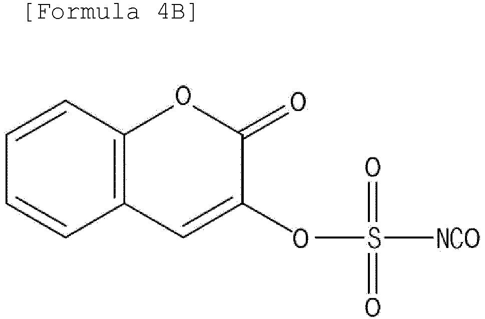

The compounds represented by Formulae 4A and 4B above preferably have the isocyanate group substituted at coumarin via a linker having a preferred length and a functional group, and thus may improve the durability of a film and simultaneously reduce resistance.

The compound represented by Formula 1 above may be included in the non-aqueous electrolyte in an amount of 0.01 wt% to 10 wt%, specifically, 0.05 wt% to 5 wt%, more specifically, 0.1 wt% to 3 wt%, and still more specifically, 0.3 wt% to 2 wt%. If the content of the compound represented by Formula 1 above satisfies the above range, it is preferable in terms of sufficiently exhibiting the above-described electrode film formation effect, organic solvent decomposition prevention effect, electrolyte side reaction prevention effect, O₂ scavenging effect, and HF scavenging effect, and preventing an increase in resistance of the lithium secondary battery due to an excessive amount of addition, and thus the deterioration in life performance.

The additive may further include an additional additive together with the compound of Formula 1. The additional additive may be included in the non-aqueous electrolyte in order to prevent the decomposition of the non-aqueous electrolyte in a high-output environment from causing negative electrode collapse, or to achieve low-temperature high-rate discharge characteristics, high-temperature stability, overcharge prevention, and battery expansion suppression effects at high temperatures.

Specifically, the additional additive may be at least one selected from the group consisting of vinylene carbonate, vinyl ethylene carbonate, fluoroethylene carbonate, propane sultone, propene sultone, succinonitrile, adiponitrile, ethylene sulfate, LiBF₄, LiPO₂F₂, lithium difluorooxalatoborate (LiODFB), lithium bis-(oxalato)borate (LiBOB), 3-trimethyoxysilanyl-propyl-*N*-aniline (TMSPa), and tris(trimethylsilyl) phosphite (TMSPi), and specifically, may be at least one selected from the group consisting of vinylene carbonate, vinylethylene carbonate, fluoroethylene carbonate, propane sultone, ethylene sulfate, LiPO₂F₂, LiBF₄, and LiODFB.

The additional additive may be included in the non-aqueous electrolyte in an amount of 0.1 wt% to 15 wt%.

### Lithium Secondary Battery

In addition, the present invention provides a lithium secondary battery including the above-described non-aqueous electrolyte.

Specifically, the lithium secondary battery may include a positive electrode including a positive electrode active material; a negative electrode including a negative electrode active material; a separator interposed between the positive electrode and the negative electrode; and the above-described non-aqueous electrolyte.

In this case, the lithium secondary battery of the present invention may be prepared according to a typical method known in the art. For example, after an electrode assembly is formed by sequentially stacking a positive electrode, a negative electrode, and a separator disposed between the positive electrode and the negative electrode, the lithium secondary battery of the present invention may be prepared by inserting the electrode assembly into a battery case, and injecting the non-aqueous electrolyte according to the present invention.

### (1) Positive Electrode

The positive electrode includes a positive electrode active material.

The positive electrode may include: a positive electrode current collector; and a positive electrode active material layer disposed on at least one surface of the positive electrode current collector. In this case, the positive electrode active material may be included in the positive electrode active material layer.

The positive electrode current collector is not particularly limited so long as it has high conductivity without causing adverse chemical changes in the battery. Specifically, the positive electrode current collector may include at least one selected from the group consisting of copper, stainless steel, aluminum, nickel, titanium, sintered carbon, and an aluminum-cadmium alloy, and preferably aluminum.

The positive electrode current collector may typically have a thickness of 3 µm to 500 µm.

The positive electrode current collector may have microscopic irregularities formed on the surface thereof to enhance the adhesion of a positive electrode active material. For example, the positive electrode current collector may be used in various shapes such as a film, a sheet, a foil, a net, a porous body, a foam body, and a non-woven fabric body.

The positive electrode active material layer is disposed on at least one surface of the positive electrode current collector. Specifically, the positive electrode active material layer may be disposed on one surface or both surfaces of the positive electrode current collector.

The positive electrode active material layer may include the positive electrode active material.

The positive electrode active material is a compound capable of reversibly intercalating and deintercalating lithium, specifically, may include a lithium transition metal composite oxide including lithium and at least one transition metal selected from nickel, cobalt, manganese, and aluminum, and preferably may include a lithium transition metal composite oxide including lithium and transition metals including nickel, cobalt, and manganese.

For example, the lithium transition metal composite oxide may include lithium-manganese-based oxide (*e.g*., LiMnO₂, LiMn₂O₄, *etc.),* lithium-cobalt-based oxide *(e.g.,* LiCoO₂, *etc.),* lithium-nickel-based oxide *(e.g.,* LiNiO₂, *etc.),* lithium-nickel-manganese-based oxide *(e.g.,* LiNi_{1-Y}Mn_{Y}O₂ (where 0<Y<1), LiMn_{2-z}Ni_{z}O₄ (where 0<Z<2), *etc.*), lithium-nickel-cobalt-based oxide (*e.g.,* LiNi_{1-Y1}Co_{Y1}O₂ (where 0<Y1<1), *etc.*), lithium-manganese-cobalt-based oxide (*e.g.,* LiCo_{1-Y2}Mn_{Y2}O₂ (where 0<Y2<1), LiMn_{2-z1}Co_{z1}O₄ (where 0<Z1<2), etc.), lithium-nickel-manganese-cobalt-based oxide *(e.g.,* Li (NiₚCo_{q}Mnᵣ₁) O₂ (where 0<p<1, 0<q<1, 0<r1<1, and p+q+r1=1) or Li (Niₚ₁Co_{q1}Mnᵣ₂)O₄ (where 0<p1<2, 0<q1<2, 0<r2<2, and p1+q1+r2=2), *etc.*), or lithium-nickel-cobalt-transition metal (M) oxide (*e.g.,* Li (Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are each independent atomic fraction of elements, wherein 0<p2<1, 0<q2<1, 0<r3<1, 0<S2<1, and p2+q2+r3+S2=1), *etc.*), and any one thereof or a compound of two or more thereof may be included. Among these materials, in terms of the improvement of capacity characteristics and stability of the battery, the lithium transition metal composite oxide may include LiCoO₂, LiMnO₂, LiNiO₂, lithium nickel manganese cobalt oxide (e.g., Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, or Li (Ni_{0.8}Mn_{0.1}Co_{0.1})O₂), or lithium nickel cobalt aluminum oxide (e.g., Li (Ni_{0.8}Co_{0.15}Al_{0.05})O₂, etc.), and, in consideration of a significant improvement effect due to the control of types and content ratios of components constituting the lithium transition metal composite oxide, the lithium transition metal composite oxide may be Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, Li (Ni_{0.8}Mn_{0.1}Co_{0.1}) O₂, or the like, and any one thereof or a mixture of two or more thereof may be used.

More specifically, the positive electrode active material may be a lithium transition metal composite oxide, and may include nickel in an amount of 60 mol% or more based on the total number of moles of the transition metal included in the lithium transition metal composite oxide. Specifically, the positive electrode active material may be a lithium transition metal composite oxide, and the transition metal may include: nickel; and at least one selected from manganese, cobalt, and aluminum, and the nickel may be included in an amount of 60 mol% or more, specifically, 60 mol% to 90 mol% based on the total number of moles of the transition metal. When the above-described non-aqueous electrolyte solution is used together with the lithium transition metal composite oxide using a high content of nickel, it is preferable in terms of reducing by-products in a gas phase generated due to structural collapse.

In addition, the positive electrode active material may include a lithium composite transition metal oxide represented by Formula 5 below:

[Formula 5] Li₁₊ₓ(NiₐCo_{b}Mn_{c}M_{d})O₂

In Formula 5 above, M is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, and 1+x, a, b, c, and d are each independent atomic fraction of elements, wherein 0≤x≤0.2, 0.50≤a<1, 0<b≤0.25, 0<c≤0.25, 0≤d≤0.1, and a+b+c+d=1.

Preferably, a, b, c, and d above may be 0.70≤a≤0.95, 0.025≤b≤0.20, 0.025≤c≤0.20, and 0≤d≤0.05, respectively.

In addition, a, b, c, and d above may be 0.80≤a≤0.95, 0.025≤b≤0.15, 0.025≤c≤0.15, and 0≤d≤0.05, respectively.

In addition, a, b, c, and d above may be 0.85≤a≤0.90, 0.05≤b≤0.10, 0.05≤c≤0.10, and 0≤d≤0.03, respectively.

Meanwhile, the positive electrode active material may include 50 mol% or more of Mn among all metals excluding lithium, and may include a lithium- and manganese-rich oxide having a molar ratio of lithium to the transition metal greater than 1.

When the lithium- and manganese-rich oxide is used as a positive electrode active material, active oxygen is generated in the process of decomposition of the lithium- and manganese-rich oxide in the rock salt phase during the initial activation process. The active oxygen attacks and decomposes an organic solvent such as ethylene carbonate, and generates gas and a resistor by-product, thereby deteriorating the physical properties of the battery. However, since the non-aqueous electrolyte includes the compound represented by Formula 1 having reactivity with active oxygen greater than with the organic solvent, the active oxygen generated in the initial activation process may be combined with the compound represented by Formula 1 prior to the organic solvent, thereby minimizing side effects due to the decomposition of the organic solvent.

The lithium- and manganese-rich oxide may be a compound represented by Formula 6 below:

[Formula 6] Li₁₊ₛ[NiₜCoᵤMnᵥM¹_{w}]O_{2+z}

In Formula 6 above, M¹ may be at least one selected from among W, Cu, Fe, V, Cr, Ti, Zr, Zn, Al, In, Ta, Y, La, Sr, Ga, Sc, Gd, Sm, Ca, Ce, Nb, Mg, B, and Mo, and 0.05≤s≤1, 0≤t≤0.5, 0≤u≤0.3, 0.5≤v<1.0, 0≤w≤0.2, and 0≤z≤1 may be satisfied, preferably, 0.05≤s≤1.0, 0.1≤t≤0.5, 0≤u≤0.1, 0.5≤v<1.0, 0≤w≤0.2, and 0≤z≤1 may be satisfied, and more preferably, 0.10≤s≤0.50, 0.1≤t≤0.5, 0≤u≤0.1, 0.6≤v<1.0, 0≤w≤0.1, and 0≤z≤0.50 may be satisfied.

More specifically, the lithium- and manganese-rich oxide may be a compound represented by Formula 6-1 below:

[Formula 6-1] X Li₂MnO₃ ·(1-X)Li [Ni_{1-y-2-w}Mn_{y}Co_{z}M¹_{w}]O₂

In Formula 6-1 above, M¹ may be at least one selected from among W, Cu, Fe, V, Cr, Ti, Zr, Zn, Al, In, Ta, Y, La, Sr, Ga, Sc, Gd, Sm, Ca, Ce, Nb, Mg, B, and Mo, and 0.1≤X≤0.5, 0.5≤y<1, 0≤z≤0.3, and 0≤w≤0.2 may be satisfied, preferably, 0.2≤X≤0.5, 0.5≤y<1, 0≤z≤0.1, and 0≤w≤0.2 may be satisfied, and preferably, 0.3≤X≤0.5, 0.6≤y<1, 0≤z≤0.1, and 0≤w≤0.2.

The positive electrode active material may be included in an amount of 80 wt% to 99 wt%, and preferably, 92 wt% to 98.5 wt% in the positive electrode active material layer in consideration of exhibiting sufficient capacity of the positive electrode active material.

The positive electrode active material layer may further include a conductive agent and/or a binder together with the positive electrode active material as described above.

The binder is a component that assists in the binding between the active material and the conductive agent and in the binding with the current collector, and specifically may include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluoro rubber, and preferably include polyvinylidenefluoride.

The binder may be included in an amount of 1 wt% to 20 wt%, and preferably, 1.2 wt% to 10 wt% in the positive electrode active material layer in terms of securing sufficient binding force between components such as positive electrode active materials.

The conductive agent is not particularly limited so long as it can be used to assist and improve conductivity in the secondary battery and has conductivity without causing adverse chemical changes. Specifically, the positive electrode conductive agent may include at least one selected from the group consisting of graphite such as natural graphite or artificial graphite; carbon black such as carbon black, acetylene black, Ketjen black, channel black, furnace black, lamp black or thermal black; a conductive fiber such as a carbon fiber or a metal fiber; a conductive tube such as a carbon nanotube; fluorocarbon; metal powder such as aluminum or nickel powder; a conductive whisker such as a zinc oxide whisker or a potassium titanate whisker; a conductive metal oxide such as a titanium oxide; and a polyphenylene derivative, and preferably include carbon black in terms of the improvement in conductivity.

The conductive agent may be included in an amount of 1 wt% to 20 wt%, and preferably, 1.2 wt% to 10 wt% in the positive electrode active material layer in terms of securing sufficient electrical conductivity.

The positive electrode active material layer may have a thickness of 30 µm to 400 µm, and preferably, 40 µm to 110 µm.

The positive electrode may be prepared by coating a positive electrode current collector with a positive electrode slurry including a positive electrode active material, and optionally a binder, a conductive agent, and a solvent for forming a positive electrode slurry and then drying and rolling the coated positive electrode current collector.

The solvent for forming a positive electrode slurry may include an organic solvent such as *N*-methyl-2-pyrrolidone (NMP). A solid content in the positive electrode slurry may be in a range of 40 wt% to 90 wt%, and particularly, 50 wt% to 80 wt%.

### (2) Negative Electrode

The negative electrode may face the positive electrode.

The negative electrode includes a negative electrode active material.

The negative electrode may include a negative electrode current collector and a negative electrode active material layer disposed on at least one surface of the negative electrode current collector. In this case, the negative electrode active material may be included in the negative electrode active material layer.

The negative electrode current collector is not particularly limited so long as it has high conductivity without causing adverse chemical changes in the battery. Specifically, copper, stainless steel, aluminum, nickel, titanium, fired carbon, copper or stainless steel that is surface-treated with one of carbon, nickel, titanium, silver, or the like, an aluminum-cadmium alloy, or the like may be used as the negative electrode current collector.

The negative electrode current collector may typically have a thickness of 3 µm to 500 µm.

The negative electrode current collector may have microscopic irregularities formed on the surface thereof to enhance the adhesion of the negative electrode active material. For example, the negative electrode current collector may be used in various shapes such as a film, a sheet, a foil, a net, a porous body, a foam body, and a non-woven fabric body.

The negative electrode active material layer is disposed on at least one surface of the negative electrode current collector. Specifically, the negative electrode active material layer may be disposed on one surface or both surfaces of the negative electrode current collector.

The negative electrode active material layer may include the negative electrode active material.

The negative electrode active material is a material capable of reversibly intercalating/deintercalating lithium ions, may include at least one selected from the group consisting of a carbon-based active material, a (metalloid-) metal-based active material, and a lithium metal, and specifically, may include at least one selected from the group consisting of a carbon-based active material and a (metalloid-) metal-based active material.

The carbon-based active material may include at least one selected from the group consisting of artificial graphite, natural graphite, hard carbon, soft carbon, carbon black, graphene, and fibrous carbon, and preferably may include at least one selected from the group consisting of artificial graphite and natural graphite.

The carbon-based active material may have an average particle diameter (D₅₀) of 10 µm to 30 µm, preferably, 15 µm to 25 µm in terms of reducing side reactions with the electrolyte while maintaining structural stability during charging and discharging.

Specifically, the (metalloid-) metal-based active material may include: at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (metalloid) metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; a lithium titanium oxide (LTO); a lithium vanadium oxide, or the like.

More specifically, the (metalloid-) metal-based active material may include a silicon-based active material.

The silicon-based active material may include a compound represented by SiOₓ (0≤x<2). Since SiO₂ does not react with lithium ions and thus cannot store lithium, x is preferably within the above range, and more preferably, the silicon-based active material may be SiO.

The silicon-based active material may have an average particle diameter (D₅₀) of 1 µm to 30 µm, preferably 2 µm to 15 µm in terms of reducing side reactions with the electrolyte while maintaining structural stability during charging and discharging.

The negative electrode active material may be included in an amount of 60 wt% to 99 wt%, and preferably, 75 wt% to 95 wt% in the negative electrode active material layer.

The negative electrode active material layer may further include a conductive agent and/or a binder together with the negative electrode active material.

The binder is used to improve the adhesion between the negative electrode active material layer and the negative electrode current collector and improve the battery performance, and may include, for example, at least one selected from the group consisting of polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluorine rubber, and a material in which hydrogen thereof is substituted with Li, Na, Ca, or the like, and may also include various copolymers thereof.

The binder may be included in an amount of 0.5 wt% to 10 wt%, and preferably, 1 wt% to 5 wt% in the negative electrode active material layer.

The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 0.5 wt% to 10 wt%, and preferably, 1 wt% to 5 wt% in the negative electrode active material layer.

The negative electrode active material layer may have a thickness of 10 µm to 100 µm, and preferably, 50 µm to 80 µm.

The negative electrode may be prepared by coating at least one surface of the negative electrode current collector with a negative electrode slurry including a negative electrode active material, a binder, a conductive agent, and a solvent for forming a negative electrode slurry and then drying and rolling the coated negative electrode current collector.

The solvent for forming a negative electrode slurry may include, for example, at least one selected from the group consisting of distilled water, N-methyl-2-pyrrolidone (NMP) , ethanol, methanol, and isopropyl alcohol, and preferably include distilled water in terms of facilitating the dispersion of the negative electrode active material, the binder and/or the conductive agent. A solid content in the negative electrode slurry may be in a range of 30 wt% to 80 wt%, and particularly, 40 wt% to 70 wt%.

### (3) Separator

Also, a typical porous polymer film used as a typical separator, for example, a porous polymer film prepared from a polyolefin-based polymer, such as an ethylene homopolymer, a propylene homopolymer, an ethylene-butene copolymer, an ethylene-hexene copolymer, and an ethylene-methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but a cylindrical type using a can, a prismatic type, a pouch type, or a coin type may be used.

Hereinafter, the present invention will be described in more detail with reference to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### Examples and Comparative Examples

### Example 1

### (Preparation of Non-aqueous Electrolyte)

As an organic solvent, a mixture of ethylene carbonate (EC) and ethylmethyl carbonate (EMC) in a volume ratio of 30:70 was used.

A non-aqueous electrolyte was prepared by adding, to the organic solvent, LiPF₆ as a lithium salt; a compound represented by Formula 4A below; and vinylene carbonate, vinylethylene carbonate, fluoroethylene carbonate, propane sultone, ethylene sulfate, LiPO₂F₂, LiBF₄, and LiODFB as additional additives.

The LiPF₆ was included in the non-aqueous electrolyte at a concentration of 1.2 M.

The compound represented by Formula 4A below was included in the non-aqueous electrolyte in an amount of 0.5 wt%.

In addition, the non-aqueous electrolyte included each of vinylene carbonate, vinylethylene carbonate, fluoroethylene carbonate, propane sultone, ethylene sulfate, LiPO₂F₂, LiBF₄, and LiODFB in a content of 0.5 wt%.

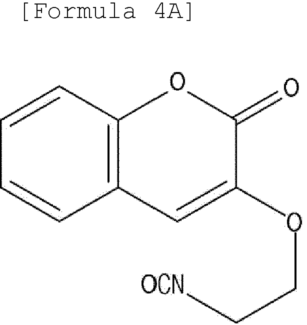

### (Manufacture of Lithium Secondary Battery)

A positive electrode active material (Li_{1.35}[Ni_{0.360}Co_{0.005}Mn_{0.635}]O₂, lithium- and manganese-rich oxide), a conductive agent (carbon nanotube), and a binder (polyvinylidene fluoride) were added to N-methyl-2-pyrrolidone (NMP), which was a solvent, in a weight ratio of 96.0:1.5:2.5 to prepare a positive electrode material mixture slurry (solid content 65 wt%). The positive electrode material mixture slurry was applied on one surface of a positive electrode current collector (Al thin film) having a thickness of 12 µm, dried, and roll-pressed to prepare a positive electrode.

A negative electrode active material (a mixture of artificial graphite and natural graphite in a weight ratio of 50.3:49.7), a conductive agent (carbon black), and a binder (styrene-butadiene rubber) were added to distilled water, which was a solvent, in a weight ratio of 96.7:1.0:2.3 to prepare a negative electrode material mixture slurry (solid content: 50 wt%). The negative electrode material mixture slurry was applied on one surface of a negative electrode current collector (Cu thin film) having a thickness of 8 µm, dried, and roll-pressed to prepare a negative electrode.

In a dry room, a polyethylene porous film separator was interposed between the positive electrode and the negative electrode as prepared above, and then the prepared non-aqueous electrolyte was injected thereto to manufacture a secondary battery.

### Example 2

A non-aqueous electrolyte and a secondary battery were prepared in the same manner as in Example 1, except that 0.1 wt% of the compound represented by Formula 4A above was added to the non-aqueous electrolyte in Example 1.

### Example 3

A non-aqueous electrolyte and a secondary battery were prepared in the same manner as in Example 1, except that 3.0 wt% of the compound represented by Formula 4A above was added to the non-aqueous electrolyte in Example 1.

### Example 4

A non-aqueous electrolyte and a secondary battery were prepared in the same manner as in Example 1, except that 0.5 wt% of the compound represented by Formula 4B below instead of the compound represented by Formula 4A above was added to the non-aqueous electrolyte in Example 1.

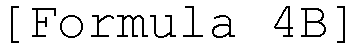

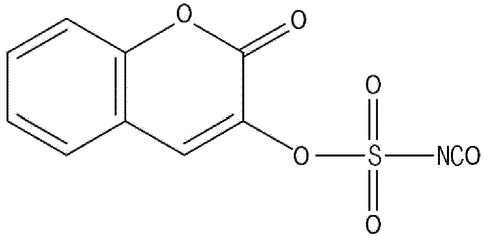

### Example 5

A non-aqueous electrolyte and a secondary battery were prepared in the same manner as in Example 4, except that 0.1 wt% of the compound represented by Formula 4B above was added to the non-aqueous electrolyte in Example 4.

### Example 6

A non-aqueous electrolyte and a secondary battery were prepared in the same manner as in Example 4, except that 3.0 wt% of the compound represented by Formula 4B above was added to the non-aqueous electrolyte in Example 4.

### Comparative Example 1

A non-aqueous electrolyte and a lithium secondary battery were prepared in the same manner as Example 1, except that the compound represented by Formula 4A above was not added.

### Comparative Example 2

A non-aqueous electrolyte and a lithium secondary battery were prepared in the same manner as in Example 1, except that the compound represented by Formula A below instead of the compound represented by Formula 4 above was added.

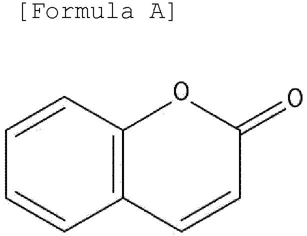

### Experimental Examples

Experimental Example 1: Evaluation of High-temperature Cycle Capacity Retention

Each of the lithium secondary batteries of Examples 1 to 6 and Comparative Examples 1 to 2 as prepared above was charged to 4.35 V and 1/40 C under the conditions of CC/CV and 0.33 C at 45 °C by using an electrochemical charger/discharger, and then discharged to 2.0 V under the conditions of CC and 0.33 C, which was set as one cycle, and 300 cycles of the charging and discharging was performed to measure the capacity retention.

The capacity retention was calculated by the following equation, and the results are shown in Table 1 below. Capacity retention (%) = { (discharge capacity after 300 cycles / discharge capacity after 1 cycle)} × 100

### Experimental Example 2: Evaluation of High-temperature Cycle Resistance Increase Rate

Each of the lithium secondary batteries of Examples 1 to 6 and Comparative Examples 1 to 2 as prepared above was charged to 4.35 V under the conditions of CC/CV and 0.33 C at 45 °C, and then discharged to 2.5 V under the conditions of CC and 0.33 C, which was set as one cycle, and 300 cycles of the charging and discharging was performed.

After one cycle of charging and discharging, the electrochemical charger/discharger was used to measure discharge capacity after one cycle, a state of charge (SOC) was adjusted to 50%, and a pulse of 2.5C was then applied for 10 seconds to calculate initial resistance through a difference between a voltage before the pulse application and a voltage after the pulse application.

After 300 cycles of charging and discharging, the resistance after 300 cycles was calculated in the same manner as described above, the resistance increase rate was calculated by using the following equation, and the results are shown in Table 1 below. Resistance increase rate (%) = (resistance after 300 cycles - initial resistance) / initial resistance × 100

Experimental Example 3: Evaluation of Volume Increase Rate after High-Temperature Cycle Charging and Discharging

In the lithium secondary batteries of Examples 1 to 6 and Comparative Examples 1 to 2 as prepared above, 300 cycles of charging and discharging were performed in the same manner as in Experimental Example 1. In this case, the volume (initial volume) of the lithium secondary battery before charging and discharging was performed and the volume of the lithium secondary battery after 300 cycles were measured, the volume increase rate was calculated by the following equation, and the results are shown in Table 3 below. Volume increase rate (%) = {(volume of lithium secondary battery after 300 cycles - initial volume) / (initial volume)} × 100

**[Table 1]**

| | Experimental Example 1 | Experimental Example 2 | Experimental Example 3 |
|---|---|---|---|
| | Capacity retention (%) | Resistance increase rate (%) | Volume increase rate (%) |
| Example 1 | 97.3 | 5.3 | 4.3 |
| Example 2 | 97.1 | 6.8 | 5.8 |
| Example 3 | 96.8 | 5.5 | 5.1 |
| Example 4 | 96.4 | 6.1 | 6.8 |
| Example 5 | 96.0 | 6.9 | 8.9 |
| Example 6 | 95.4 | 6.5 | 7.5 |
| Comparative Example 1 | 83.1 | 10.3 | 15.3 |
| Comparative Example 2 | 85.1 | 9.8 | 13.3 |

Referring to Table 1, it may be confirmed that the lithium secondary batteries of Examples 1 to 6 using the non-aqueous electrolyte including the compound represented by Formula 1 have excellent high-temperature cycle life performance, low resistance increase rate due to cycles, and low volume increase due to cycles compared to the lithium secondary batteries of Comparative Examples 1 to 2.

### Experimental Example 4: Evaluation of Capacity Retention after High-Temperature Storage

The lithium secondary batteries of Examples 1 to 6 and Comparative Examples 1 to 2 as prepared above were charged to 4.35 V and 1/40 C under the conditions of CC/CV and 0.33 C at 25 °C and discharged to 2.5 V under the condition of 0.33 C to perform initial charging and discharging, then charged to 4.35 V and 1/40 C under the conditions of CC/CV and 0.33 C at 25 °C, and then stored at 60 °C for 12 weeks. After storage, the secondary batteries were charged to 4.35 V and 1/40 C under the conditions of CC/CV and 0.33 C at 25 °C, and discharged to 2.0 V under the condition of 0.33 C to measure the capacity during the discharging.

Capacity retention was evaluated according to the following equation, and the results are shown in Table 2. Capacity retention rate (%) = (discharge capacity after 12-week storage / initial discharge capacity) × 100

### Experimental Example 5: Evaluation of Resistance Increase Rate after High-temperature Storage

The lithium secondary batteries of Examples 1 to 6 and Comparative Examples 1 to 2 as prepared above were initially charged and discharged in the same manner as in Experimental Example 4, the capacity was checked at room temperature, the lithium secondary batteries were charged at a SOC of 50% based on the discharge capacity and were discharged at a current of 3 C for 10 seconds, the resistance was measured by means of a voltage drop difference at this time and defined as an initial resistance, the resistance was measured in the same manner after 12-week storage at 60 °C and defined as a final resistance, and the resistance increase rate was calculated by the following equation. The results are shown in Table 2 below. Resistance increase rate (%) = (final resistance - initial resistance) / (initial resistance) × 100

### Experimental Example 6: Evaluation of Volume Increase Rate after High-Temperature Storage

The lithium secondary batteries of Examples 1 to 6 and Comparative Examples 1 to 2 as prepared above were initially charged and discharged in the same manner as in Experimental Example 4, and the volume of each battery was measured by setting it to SOC 50 based on the discharge capacity and defined as an initial volume, and the volume measured after 12-week storage at SOC 100% and 60 °C was defined as a final volume, and the volume increase rate of the battery was calculated by using the following equation. The results are shown in Table 2 below. Volume increase rate (%) = (final volume - initial volume) / (initial volume) × 100

**[Table 2]**

| | Experimental Example 4 | Experimental Example 5 | Experimental Example 6 |
|---|---|---|---|
| | Capacity retention (%) | Resistance increase rate (%) | Volume increase rate (%) |
| Example 1 | 98.1 | 3.9 | 4.5 |
| Example 2 | 97.4 | 4.8 | 6.3 |
| Example 3 | 96.1 | 4.1 | 5.5 |
| Example 4 | 97.1 | 4.3 | 7.3 |
| Example 5 | 96.2 | 5.8 | 8.3 |
| Example 6 | 96.8 | 5.2 | 7.5 |
| Comparative | 75.4 | 10.1 | 20.3 |
| Example 1 | | | |
| Comparative Example 2 | 80.3 | 9.2 | 18.3 |

Referring to Table 2, it may be confirmed that the lithium secondary batteries of Examples 1 to 6 using the non-aqueous electrolyte including the compound represented by Formula 1 have excellent high-temperature storage life performance, low resistance increase rate, and low volume increase compared to the lithium secondary batteries of Comparative Examples 1 to 2.

## Claims

1. A non-aqueous electrolyte comprising:
a lithium salt;
an organic solvent; and
an additive,
wherein the additive comprises a compound represented by Formula 1 below: 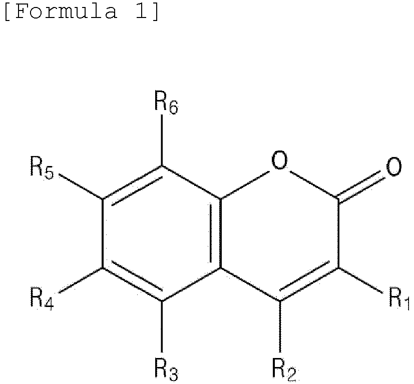
wherein, in Formula 1 above, R₁ to R₆ each independently comprise hydrogen, halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and
at least one among R₁ to R₆ comprises an isocyanate group.

2. The non-aqueous electrolyte of claim 1, wherein the compound represented by Formula 1 above comprises a compound represented by Formula 2 below: 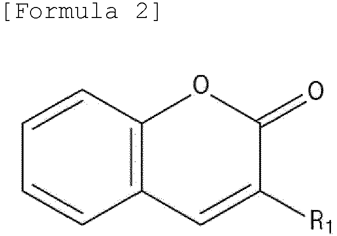
wherein, in Formula 2 above, the definition of R₁ is the same as defined in Formula 1 above, and
R₁ comprises an isocyanate group.

3. The non-aqueous electrolyte of claim 1, wherein the compound represented by Formula 1 above comprises a compound represented by Formula 3 below: 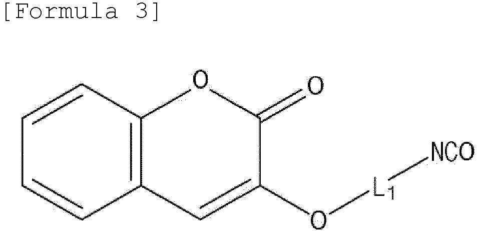 wherein, in Formula 3 above, L₁ is a substituted or unsubstituted alkylene group, a substituted or unsubstituted alkenylene group, a substituted or unsubstituted alkynylene group, a sulfone group, a sulfonate group, or a combination of two or more thereof.

4. The non-aqueous electrolyte of claim 1, wherein the compound represented by Formula 1 above comprises at least one selected from the group consisting of a compound represented by Formula 4A below and a compound represented by Formula 4B below:

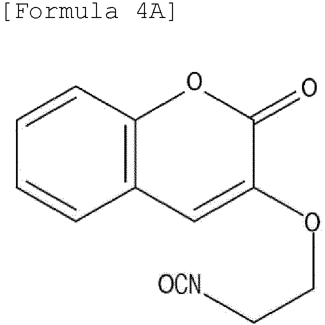

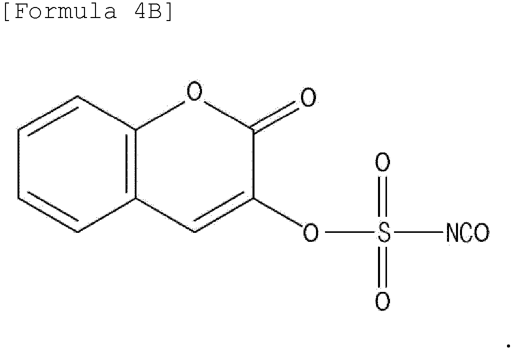

5. The non-aqueous electrolyte of claim 1, wherein the compound represented by Formula 1 is included in an amount of 0.01 wt% to 10 wt% in the non-aqueous electrolyte.

6. The non-aqueous electrolyte of claim 1, wherein the lithium salt comprises at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiB(C₂O₄)₂ (LiBOB), LiCF₃SO₃, LiN(SO₂F)₂ (LiFSI), LiCH₃SO₃, LiCF₃CO₂, LiCH₃CO₂, and LiN(SO₂CF₂CF₃)₂ (LiBETI) .

7. The non-aqueous electrolyte of claim 1, wherein the lithium salt is included in a molar concentration of 0.5 M to 5.0 M in the non-aqueous electrolyte.

8. The non-aqueous electrolyte of claim 1, wherein the organic solvent comprises at least one selected from the group consisting of a cyclic carbonate-based organic solvent, a linear carbonate-based organic solvent, a linear ester-based organic solvent, and a cyclic ester-based organic solvent.

9. The non-aqueous electrolyte of claim 1, wherein the additive further comprises at least one additional additive selected from the group consisting of vinylene carbonate, vinyl ethylene carbonate, fluoroethylene carbonate, propane sultone, propene sultone, succinonitrile, adiponitrile, ethylene sulfate, LiPO₂F₂, lithium difluorooxalatoborate (LiODFB), lithium bis-(oxalato)borate (LiBOB), 3-trimethyoxysilanyl-propyl-N-aniline (TMSPa), and tris(trimethylsilyl) phosphite (TMSPi).

10. A lithium secondary battery comprising:
a positive electrode including a positive electrode active material;
a negative electrode including a negative electrode active material;
a separator interposed between the positive electrode and the above negative electrode; and
the non-aqueous electrolyte according to claim 1.

11. The lithium secondary battery of claim 10, wherein the positive electrode active material comprises 50 mol% or more of Mn among all metals excluding lithium, and comprises a lithium- and manganese-rich oxide having a molar ratio of lithium to the transition metal greater than 1.

12. The lithium secondary battery of claim 11, wherein the lithium- and manganese-rich oxide is a compound represented by Formula 6 below:
[Formula 6] Li₁₊ₛ[NiₜCoᵤMnᵥM¹_{w}]O_{2+z}
wherein, in Formula 6 above, M¹ is at least one selected from among W, Cu, Fe, V, Cr, Ti, Zr, Zn, Al, In, Ta, Y, La, Sr, Ga, Sc, Gd, Sm, Ca, Ce, Nb, Mg, B, and Mo, and 0.05≤s≤1, 0≤t≤0.5, 0≤u≤0.3, 0.5≤v<1.0, 0≤w≤0.2, and 0≤z≤1 are satisfied.
